# EUROPÄISCHE PATENTSCHRIFT

(11) **EP 2 690 209 B1**
(45) Veröffentlichungstag und Bekanntmachung des Hinweises auf die Patenterteilung: **15.03.2017**
(21) Anmeldenummer: 13003142.0
(22) Anmeldetag: 20.06.2013
(51) Int. Cl.: D01H 4/12

(54) **STÜTZSCHEIBENLAGERUNG FÜR EINE OFFENEND-SPINNEINRICHTUNG**
SUPPORT DISC BEARING FOR AN OPEN-ENDED SPINNING MACHINE
PALIER À DISQUES D'APPUI POUR UN MÉTIER À TISSER À EXTRÉMITÉ OUVERTE

(30) Priorität: 24.07.2012 DE 102012014660
(43) Veröffentlichungstag der Anmeldung: 29.01.2014
(73) Patentinhaber: Saurer Germany GmbH & Co. KG, 42897 Remscheid (DE)
(72) Erfinder: Wassenhoven, Heinz-Georg, 41065 Mönchengladbach (DE)

(56) Entgegenhaltungen:
- EP-A1- 1 852 530
- DE-A1- 4 426 202
- DE-A1- 10 046 525
- US-A1- 2002 112 462

## Beschreibung

Die Erfindung betrifft eine Rotorlagerung für eine Offenend-Spinneinrichtung umfassend zwei Stützscheibenpaare, deren Stützscheiben so angeordnet sind, dass sie einen Keilspalt bilden und einen Spinnrotor mit einem Rotorschaft, der in dem Keilspalt gelagert ist. Die Erfindung betrifft ferner ein Verfahren zur Herstellung einer Stützscheibe mit einem Grundkörper aus Kunststoff.

Zur Lagerung von Spinnrotoren in Offenend-Spinneinrichtungen werden verschiedene Systeme verwendet. Der Rotorschaft des Spinnrotors kann direkt gelagert sein. Dazu kann ein sogenanntes Zapfenlager verwendet werden. Es sind aber auch indirekte Lagerungen bekannt, bei denen der Rotorschaft in Stützscheiben gelagert ist, wobei die Stützscheiben ihrerseits mittels eines Zapfenlagers gelagert sein können. Eine Stützscheibenlagerung weist im Vergleich zu einer direkten Lagerung mit Zapfenlagern eine höhere Lebensdauer auf, da die Stützscheiben bei gleicher Rotordrehzahl aufgrund des Übersetzungsverhältnisses zwischen dem Rotorschaft und den Stützscheiben mit geringerer Drehzahl betrieben werden. Allerdings ist die Konstruktion einer Stützscheibenlagerung im Vergleich zu einer Direktlagerung relativ aufwendig und verursacht damit hohe Herstellungskosten.
Die DE 44 26 202 A1 offenbart eine Stützscheibenlagerung für eine Offenend-Spinneinrichtung mit einem Spinnrotor. Der Rotorschaft des Spinnrotors wird von einem Tangentialriemen angetrieben und ist im Keilspalt zweier Stützscheibenpaare gelagert. Jedes Stützscheibenpaar bildet einen eigenen Keilspalt. Die Stützscheibenpaare sind in axialer Richtung des Rotorschaftes zueinander beabstandet, so dass für den Rotorschaft zwei Auflagepunkte zur Verfügung stehen. Jeweils eine Stützscheibe eines Stützscheibenpaares ist über eine Lageranordnung, die aus einer drehbaren Lagerachse mit Positionierungsmitteln, Wälzlagern, einer zwischen den Wälzlagern eingeschalteten Federhülse sowie einem Lagergehäuse besteht, auf einer rückseitig des Rotorgehäuses angeordneten Konsole gelagert. Die Stützscheiben werden jeweils auf die Enden der drehbaren Lagerachse mittels einer Presspassung aufgebracht. Die Stützscheiben weisen einen Grundkörper aus Aluminium und auf dem Umfang des Grundkörpers einen elastischen Kunststofflaufring auf. Der Kunststofflaufring ist zu Dämpfungszwecken erforderlich.
Die DE 102 00 743 A1 offenbart eine Stützscheibe aus Aluminium mit einer Lauffläche aus Kunststoff, z.B. Polyurethan oder Kautschuk. Der Laufbelag der Stützscheibe wird mittels Spritzgießen auf den Grundkörper aufgebracht. Der Grundkörper kann durch Drehen aus einem Vollmaterial hergestellt werden. Bohrungen werden in einem zusätzlichen Arbeitsschritt eingebracht. Dies bedeutet einen hohen Fertigungsaufwand. Es ist auch bekannt, den Aluminiumkörper durch Fließpressen herzustellen. Dadurch wird der Fertigungsaufwand zwar reduziert, der Aluminiumkörper kann aber nicht mit der erforderlichen Passgenauigkeit hergestellt werden, so dass der Grundkörper in der Regel durch spanende Bearbeitung nachgearbeitet werden muss.
Die EP 1 852 530 A1 offenbart ebenfalls eine Stützscheibe für eine Rotorlagerung einer Offenend-Spinneinrichtung. Es wird die Möglichkeit beschrieben, dass der Grundkörper auch aus Kunststoff hergestellt werden kann. Es hat sich jedoch gezeigt, dass sich die Stützscheibe mit einem Grundkörper aus Kunststoff nicht zuverlässig auf eine Lagerachse oder auf Lagerzapfen aufgebracht werden kann, weil das Kunststoffmaterial bei Presskräften anfängt zu fließen. Das heißt, es findet eine plastische Verformung des Kunststoffes statt, die einen zuverlässigen Halt unmöglich macht. Um den Sitz auf dem Lagerzapfen zu verbessern, wird deshalb vorgeschlagen, nach Herstellung des Kunststoffgrundkörpers in seine Nabe eine aus Metall bestehende Buchse einzusetzen.

Der vorliegenden Erfindung liegt die Aufgabe zugrunde, eine Rotorlagerung mit Stützscheiben für eine Offenend-Spinneinrichtung zur Verfügung zu stellen, die einfach und damit kostengünstig herzustellen ist.

Zur Lösung der Aufgabe umfasst die Rotorlagerung Stützscheiben mit einem Grundkörper, in dem das Wälzlager angeordnet ist. Die Rotorlagerung weist ferner feststehende Lagerbolzen auf, auf denen die Wälzlager aufgebracht sind.

Erfindungsgemäß ist das Wälzlager nicht mehr Teil einer separaten aufwendigen Lageranordnung, sondern direkt in die Stützscheiben eingebettet. Durch die feststehenden Lagerbolzen kann die Anordnung vergleichssweise einfach und mit hoher Genauigkeit gefertigt werden. Die erfindungsgemäße Anordnung weist im Vergleich zu Stützscheiben auf einem in einem Zapfenlager gelagerten Achse weniger Einzelteile auf, so dass die Toleranzabweichungen verringert werden können. Insbesondere wird die Parallelität der Achsen der Stützscheiben verbessert. Das ist wichtig für eine optimale Auflage des Rotorschaftes. Eine unsymmetrische Auflage des Rotorschaftes beeinflusst den Rundlauf negativ und kann damit zu erhöhten Verschleiß führen und das Spinnergebnis negativ beeinflussen. Entsprechendes gilt auch für Unsymmetrien, die den Rundlauf beeinflussen. Aus diesem Grund werden rotierende Teile von Rotorlagerungen häufig gewuchtet. Sofern bei der erfindungsgemäßen Anordnung aufgrund der höheren Fertigungsgenauigkeit überhaupt noch ein Wuchten erforderlich ist, gestaltet sich das Wuchten einfacher, da weniger rotierende Teile vorhanden sind. Die Stützscheiben für eine erfindungsgemäße Rotorlagerung können separat gewuchtet werden. Das Wuchten muss nicht im eingebauten Zustand erfolgen.

Vorzugsweise sind die Wälzlager jeweils durch eine Presspassung mit einem der feststehenden Lagerbolzen verbunden. Damit kann im Zusammenhang mit der erfindungsgemäßen Lagerung eine einfache und bekannte Verbindungstechnik verwendet werden.

Der Grundkörper der Stützscheiben kann vorteilhafterweise aus Kunststoff sein. Kunststoff hat ein geringes Gewicht, ist leicht zu formen und preiswert.

Der Grundkörper aus Kunststoff kann mittels Spritzgießen hergestellt sein. Durch das Spritzgussverfahren kann die Stützscheibe beziehungsweise deren Grundkörper leicht herstellt werden.

Es ist aber auch möglich eine Stützscheibe für eine erfindungsgemäße Rotorlagerung mit einem Grundkörper aus Metall, insbesondere aus Aluminium, zu fertigen
Bei einem Grundkörper aus Kunststoff kann das Wälzlager in dem Grundkörper eingebettet und mittels der beim Spritzgießen auftretenden Schrumpfung in den Grundkörper eingepasst sein. Die Verbindung des Grundkörpers mit dem Wälzlager kann so leicht und formstabil erzeugt werden. Die Schrumpfung während des Spritzgießens schafft eine passgenaue Verbindung zwischen Grundkörper und Wälzlager. Eine problematische Pressverbindung zwischen einem Metall- und einem Kunststoffelement ist nicht erforderlich.

Gemäß einer bevorzugten Ausführungsform der Rotorlagerung umschließt der Grundkörper der Stützscheiben den Außenumfang des Wälzlagers in radialer Richtung. Der Grundkörper kann das Wälzlager aber auch zumindest teilweise in axialer Richtung umschließen. Wenn beide Merkmale erfüllt sind, entsteht eine sowohl in radialer als auch in axialer Richtung formschlüssige Verbindung zwischen dem Grundkörper und dem Wälzlager.

Bei einem Grundkörper aus Metall kann das Wälzlager mit dem Grundkörper mittels einer Presspassung oder durch Bördeln verbunden sein.

Das Wälzlager kann mit dem Grundkörper auch durch Kleben verbunden werden.

Vorzugsweise ist auf dem Außenumfang des Grundkörpers ein Laufbelag vorhanden.

Bei einem Grundkörper aus Kunststoff besteht der Grundkörper aus einem ersten Kunststoff und der Laufbelag aus einem zweiten Kunststoff. Durch die Verwendung unterschiedlicher Kunststoffe können die jeweiligen Anforderungen leicht berücksichtigt werden. Der Laufbelag besteht vorzugsweise aus einem elastischen Kunststoff, z.B. Polyurethan. Für den Grundkörper sollte ein Material mit einer höheren Steifigkeit gewählt werden, z.B. ein Polyamid. Das Polyamid kann zusätzlich glasfaserverstärkt sein. Die Herstellung kann durch ein bekanntes Zwei-Komponenten-Spritzgussverfahren erfolgen.

Das Wälzlager ist vorzugsweise als Kugellager ausgebildet. Ein Kugellager, präziser ein radiales Kugellager, kann radiale Kräfte aufnehmen, aber in gewissen Maße auch axiale Kräfte. Deshalb ist das Kugellager besonders geeignet. Prinzipiell ist es aber auch möglich, ein Rollenlager zu verwenden.

Die Erfindung betrifft außerdem ein Verfahren zur Herstellung einer erfindungsgemäßen Stützscheibe aus Kunststoff, wobei das Wälzlager vor dem Spritzgießen in einem der Herstellung des Grundkörpers dienenden Werkzeug angeordnet ist und das Wälzlager beim Spritzgießen so mit dem Grundkörper verbunden wird, dass es fest in dem Grundkörper sitzt.

Die Erfindung wird nachfolgend anhand eines in den Zeichnungen dargestellten Ausführungsbeispiels näher erläutert.

Es zeigen:
- Fig. 1: eine Seitenansicht einer erfindungsgemäßen Offenend-Spinneinrichtung mit eine Stützscheibenlagerung;
- Fig. 2: eine Draufsicht auf eine erfindungsgemäße Stützscheibenlagerung;
- Fig. 3: eine Stützscheibe aus Kunststoff für eine erfindungsgemäße Stützscheibenlagerung;
- Fig. 4: eine Stützscheibe aus Aluminium für eine erfindungsgemäße Stützscheibenlagerung;
- Fig. 5: eine Stützscheibe aus Aluminium mit zwei Wälzlagern für eine erfindungsgemäße Stützscheibenlagerung.

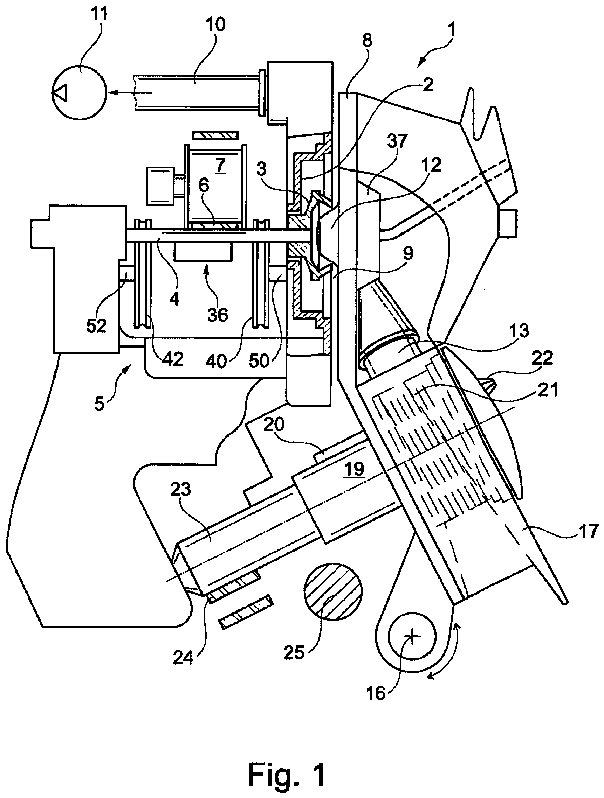

Die in Fig. 1 dargestellte Offenend-Rotorspinnvorrichtung 1 verfügt über ein Rotorgehäuse 2, in dem ein Spinnrotor 3 mit hoher Drehzahl umläuft. Im Ausführungsbeispiel ist der Spinnrotor 3 mit seinem Rotorschaft 4 im Keilspalt, auch Zwickel genannt, einer Stützscheibenlagerung 5 abgestützt und wird durch einen maschinenlangen Tangentialriemen 6, der durch eine Andrückrolle 7 beaufschlagt wird, angetrieben. Im Bereich des Rotorschaftes 4 ist eine an sich bekannte Bremseinrichtung 36 für den Spinnrotor angeordnet.

Das nach vorne hin an sich offene Rotorgehäuse 2 ist während des Spinnbetriebes durch ein schwenkbar gelagertes Deckelelement 8, in das eine Kanalplatte 37 mit einer Aufnahme für einen austauschbaren Kanalplattenadapter 12 und eine Ringnut für eine Dichtung 9 integriert ist, verschlossen.

Das Rotorgehäuse 2 ist außerdem über eine entsprechende Pneumatikleitung 10 an eine Unterdruckquelle 11 angeschlossen, die den während des Spinnbetriebes im Rotorgehäuse 2 notwendigen Spinnunterdruck erzeugt. Wie vorstehend erläutert, in den Figuren allerdings nicht näher dargestellt, ist in einer Aufnahmeöffnung der Kanalplatte 37 ein auswechselbarer Kanalplattenadapter 12 angeordnet, der, wie üblich, frontseitig eine Fadenabzugsdüse sowie den Mündungsbereich eines ausgangsseitigen Faserleitkanalabschnitts aufweist. Dieser ausgangsseitige Faserleitkanalabschnitt schließt sich im Betriebszustand an einen durch den Faserleitkanal 13 gebildeten eingangsseitigen Faserleitkanalabschnitt an.

Das Deckelelement 8, das um eine Schwenkachse 16 begrenzt drehbar gelagert ist, verfügt über ein Auflösewalzengehäuse 17 und weist rückwärtige Lagerkonsolen 19, 20 zur Lagerung einer Auflösewalze 21 beziehungsweise eines Faserband-Einzugszylinders 22 auf. Wie angedeutet, wird die Auflösewalze 21 beim Ausführungsbeispiel im Bereich ihres Wirtels 23 durch einen umlaufenden, maschinenlangen Tangentialriemen 24 angetrieben, während der Antrieb des Faserbandeinzugszylinders 22 vorzugsweise über eine (nicht dargestellte) Schneckengetriebeanordnung erfolgt, die auf eine maschinenlange Antriebswelle 25 geschaltet ist.
In alternativer Ausführungsform können selbstverständlich auch hier einzelmotorische Antriebe für die Auflösewalze 21 und/oder den Faserbandeinzugszylinder 22 vorgesehen werden.

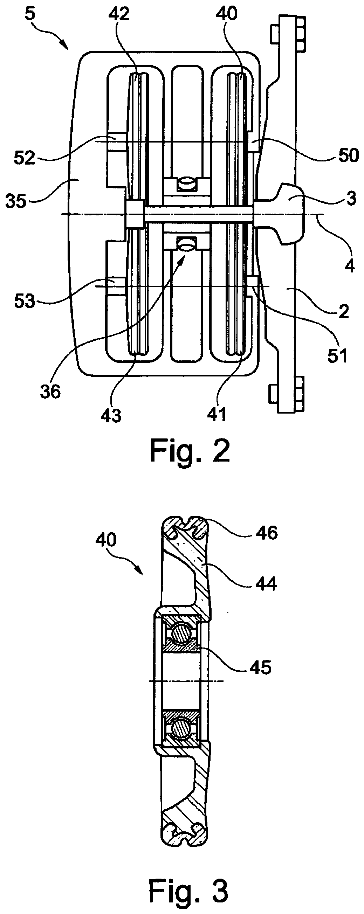

In Fig. 2 ist die Stützscheibenlagerung 5 genauer dargestellt. In dem dargestellten Ausführungsbeispiel ist der Rotorschaft 4 in zwei Stützscheibenpaaren gelagert. Das erste Stützscheibenpaar wird von den Stützscheiben 40 und 41 gebildet und das zweite von den Stützscheiben 42 und 43. In die Stützscheiben ist ein Kugellager 45 eingebettet, wie in Fig. 3 zu sehen ist. An einem Tragrahmen 35 sind vier feststehende Lagerbolzen 50, 51, 52, 53 angeordnet. Auf diese Lagerbolzen 50, 51, 52, 53 sind die Kugellager 45 der Stützscheiben 40, 41, 42, 43 aufgepresst.

Die Stützscheine 40 ist in Fig. 3 genauer dargestellt, wobei die anderen Stützscheiben 41, 42, 43 identisch aufgebaut sind. Die Stützscheibe 40 weist einen Grundkörper 44, einen Laufbelag 46 und ein Kugellager 45 auf. Der Grundkörper 44 besteht aus einem glasfaserverstärkten Polyamid, das die erforderliche Steifigkeit aufweist. Der Grundkörper 44 ist durch ein Spritzgussverfahren hergestellt. Dazu wird mit einer Spritzgießmaschine der Kunststoff in einer Spritzeinheit plastifiziert und in ein Spritzgießwerkzeug eingespritzt. Der Hohlraum des Spritzgießwerkzeuges gibt dabei die Form der Stützscheibe vor. Das Kugellager 45 ist bereits während des Spritzgießens in dem Werkzeug angeordnet, so dass es mit dem Kunststoff umspritzt wird. Die Fixierung des Kugellagers in dem Werkzeug kann zum Beispiel am Innenradius des Kugellagers erfolgen, der nicht mit Kunststoff umspritzt wird. Das Kugellager ist in den fertiggestellten Grundkörper eingebettet und mittels der beim Spritzgießen auftretenden Schrumpfung eingepasst. In dem dargestellten Ausführungsbeispiel umschließt der Grundkörper den Außenumfang des Wälzlagers in radialer Richtung und der Grundkörper umschließt das Wälzlager teilweise in axialer Richtung.

In einem zweiten Schritt des Spritzgussverfahrens wird auf den Außenumfang des Grundkörpers 44 ein Laufbelag 46 aus Polyurethan aufgebracht. Um eine feste Verbindung zwischen dem Grundkörper 44 und dem Laufbelag 46 zu erreichen und ein Lösen des Laufbelages bei einer hohen Betriebsdrehzahl der Stützscheibe 40 zu vermeiden, weist der Grundkörper 44 an seinen Außenumfang in bekannter Weise eine Profilierung auf.

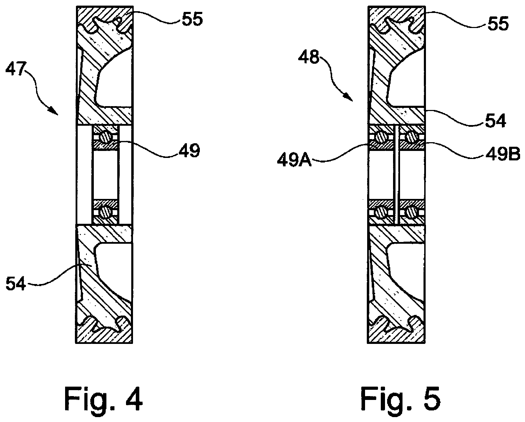

Die Figuren 4 und 5 zeigen jeweils eine alternative Ausführungsform einer erfindungsgemäßen Stützscheibe 47 und 48. Die Stützscheiben 47 und 48 können in eine Rotorlagerung entsprechend den Figuren 1 und 2 angeordnet werden. Die Stützscheiben 47 und 48 weisen jeweils einen Grundkörper 54 aus Aluminium auf. Es sind aber auch andere Metalle möglich. Auf den Grundkörper 54 ist ein Laufbelag 55 aus Polyuretan aufbracht. Es ist natürlich auch möglich andere elastische Kunststoffe als Laufbelag zu verwenden. In den Grundkörper 54 der Stützscheibe 47 ist ein Kugellager 49 eingepresst. Die Stützscheibe 48 unterscheidet sich von der Stützscheibe 47 nur dadurch, dass in den Grundkörper 54 zwei Kugellager 49A und 49B eingepresst sind. Bei Verwendung von zwei Lagern verteilen sich Kräfte auf die beiden Lager und die Lebensdauer der Stützscheibe wird erhöht.

Als weitere nicht dargestellte Ausführungsform der vorliegenden Erfindung ist eine Stützscheibe aus Kunststoff möglich, in die zwei Lager eingebettet sind.

## Patentansprüche

1. Rotorlagerung für eine Offenend-Spinneinrichtung (1), umfassend zwei Stützscheibenpaare, deren Stützscheiben (40, 41; 42, 43, 47, 48) jeweils so angeordnet sind, dass sie einen Keilspalt bilden, und einen Spinnrotor (3) mit einem Rotorschaft (4), der in dem Keilspalt gelagert ist, wobei die Stützscheiben (40, 41, 42, 43, 47, 48) jeweils einen Grundkörper (44) umfassen, **dadurch gekennzeichnet, dass** jeweils ein Wälzlager (45, 49, 49A, 49B) in den Grundkörpern (44) angeordnet ist, die Rotorlagerung feststehende Lagerbolzen (50, 51, 52, 53) aufweist und die Wälzlager (45, 49, 49A, 49B) jeweils auf einem Lagerbolzen (50, 51, 52, 53) aufgebracht sind.

2. Rotorlagerung nach Anspruch 1, **dadurch gekennzeichnet, dass** die Wälzlager (45, 49, 49A, 49B) mit den Lagerbolzen (50, 51, 52, 53) durch eine Presspassung verbunden sind.

3. Rotorlagerung nach einem der Ansprüche 1 oder 2, **dadurch gekennzeichnet, dass** der Grundkörper (44) der Stützscheiben (40, 41, 42, 43) aus Kunststoff besteht.

4. Rotorlagerung nach Anspruch 3, **dadurch gekennzeichnet, dass** der Grundkörper (44) mittels Spritzgießen hergestellt ist.

5. Rotorlagerung nach Anspruch 4, **dadurch gekennzeichnet, dass** in dem Grundkörper (44) das Wälzlager (45) eingebettet und mittels der beim Spritzgießen auftretenden Schrumpfung eingepasst ist.

6. Rotorlagerung nach Anspruch 5, **dadurch gekennzeichnet, dass** der Grundkörper (44) den Außenumfang des Wälzlagers (45) in radialer Richtung umschließt.

7. Rotorlagerung nach einem der Ansprüche 5 oder 6, **dadurch gekennzeichnet, dass** der Grundkörper (44) das Wälzlager (45) zumindest teilweise in axialer Richtung umschließt.

8. Rotorlagerung nach einem der Ansprüche 3 bis 7, **dadurch gekennzeichnet, dass** auf dem Außenumfang des Grundkörpers (44) ein Laufbelag (46) vorhanden ist, wobei der Grundkörper (44) aus einem ersten Kunststoff und der Laufbelag (46) aus einem zweiten Kunststoff besteht.

9. Rotorlagerung nach einem der Ansprüche 1 oder 2, **dadurch gekennzeichnet, dass** die Stützscheiben (47, 48) einen Grundkörper (54) aus Metall umfassen.

10. Rotorlagerung nach Anspruch 9, **dadurch gekennzeichnet, dass** die Stützscheiben (47, 48) einen Grundkörper (54) aus Aluminium umfassen.

11. Rotorlagerung nach einem der Ansprüche 9 oder 10, **dadurch gekennzeichnet, dass** das Wälzlager (49, 49A, 49B) mit dem Grundkörper (54) mittels einer Presspassung verbunden ist.

12. Rotorlagerung nach einem der Ansprüche 9 oder 10, **dadurch gekennzeichnet, dass** das Wälzlager (49, 49A, 49B) mit dem Grundkörper (54) durch Bördeln verbunden ist.

13. Rotorlagerung nach einem der Ansprüche 1, 2, 3, 4, 9 oder 10, **dadurch gekennzeichnet, dass** das Wälzlager (45, 49, 49A, 49B) mit dem Grundkörper (44, 54) durch Kleben verbunden ist.

14. Rotorlagerung nach einem der Ansprüche 1, 2, 9, 10, 11, 12 oder 13, **dadurch gekennzeichnet, dass** auf dem Außenumfang des Grundkörpers (44, 54) ein Laufbelag (46, 55) vorhanden ist.

15. Rotorlagerung nach einem der Ansprüche 1 bis 14, **dadurch gekennzeichnet, dass** das Wälzlager als Kugellager (45, 49, 49A, 49B) ausgebildet ist.

16. Verfahren zur Herstellung einer Stützscheibe (40, 41, 42, 43), wobei die Stützscheibe (40, 41, 42, 43) einen Grundkörper (44, 54) aus Kunststoff umfasst und in dem Grundkörper (44, 54) ein Wälzlager angeordnet ist, **dadurch gekennzeichnet, dass** der Grundkörper (44, 54) durch Spritzgießen hergestellt wird, dass das Wälzlager (45) vor dem Spritzgießen in einem der Herstellung des Grundkörpers (44) dienenden Werkzeug angeordnet wird und dass das Wälzlager (45) beim Spritzgießen so mit dem Grundkörper (44) verbunden wird, dass es fest in dem Grundkörper sitzt.

## Claims

1. Rotor bearing for an open-end spinning device (1), comprising two support disc pairs, the support discs (40, 41, 42, 43, 47, 48) of which are arranged respectively in such a way that they form a wedge gap, and a spinning rotor (3) with a rotor shaft (4), which is mounted in the wedge gap, each of the support discs (40, 41, 42, 43, 47, 48) comprising a base body (44), **characterised in that** a respective rolling bearing (45, 49, 49A, 49B) is arranged in the base bodies (44), the rotor bearing has fixed bearing bolts (50, 51, 52, 53) and each of the rolling bearings (45, 49, 49A, 49B) are applied on a bearing bolt (50, 51, 52, 53).

2. Rotor bearing according to claim 1, **characterised in that** the rolling bearings (45, 49, 49A, 49B) are connected to the bearing bolts (50, 51, 52, 53) by means of a press fit.

3. Rotor bearing according to any of claims 1 or 2, **characterised in that** the base body (44) of the support discs (40, 41, 42, 43) is made of plastic material.

4. Rotor bearing according to claim 3, **characterised in that** the base body (44) is produced by means of injection moulding.

5. Rotor bearing according to claim 5, **characterised in that** the rolling bearing (45) is embedded in the base body (44) and is fitted in by means of the shrinkage occurring during the injection moulding.

6. Rotor bearing according to claim 5, **characterised in that** the base body (44) surrounds the outer periphery of the rolling bearing (45) in radial direction.

7. Rotor bearing according to any of claims 5 or 6, **characterised in that** the base body (44) at least partially surrounds the rolling bearing (45) in axial direction.

8. Rotor bearing according to any of claims 3 to 7, **characterised in that** a running coating (46) is provided on the outer periphery of the base body (44), the base body (44) being made from a first plastic material and the running coating (46) being made from a second plastic material.

9. Rotor bearing according to any of claims 1 or 2, **characterised in that** the support discs (47, 48) comprise a base body (54) made of metal.

10. Rotor bearing according to claim 9, **characterised in that** the support discs (47, 48) comprise a base body (54) made of aluminium.

11. Rotor bearing according to any of claims 9 or 10, **characterised in that** the rolling bearing (49, 49A, 49B) is connected to the base body (54) by means of a press fit.

12. Rotor bearing according to any of claims 9 or 10, **characterised in that** the rolling bearing (49, 49A, 49B) is connected to the base body (54) by flanging.

13. Rotor bearing according to any one of claims 1, 2, 3, 4, 9 or 10, **characterised in that** the rolling bearing (45, 49, 49A, 49B) is connected to the base body (44, 54) by adhesion.

14. Rotor bearing according to any one of claims 1, 2, 9, 10, 11, 12 or 13, **characterised in that** a running coating (46, 55) is provided on the outer periphery of the base body (44, 54).

15. Rotor bearing according to any of claims 1 to 14, **characterised in that** the rolling bearing is configured as a ball bearing (45, 49, 49A, 49B).

16. Method for producing a support disc (40, 41, 42, 43), wherein the support disc (40, 41, 42, 43) comprises a base body (44, 54) made of plastic material and a rolling bearing (45) is arranged in the base body (44, 54), **characterised in that** the base body (44) is produced by injection moulding, **in that** the tolling bearing (45) is arranged prior to the injection moulding in a die used for the production of the base body (44) and **in that** the rolling bearing (45) is connected to the base body (44) during the injection moulding in such a way that it is rigidly seated in the base body.

## Revendications

1. Système de montage de rotor dévolu à un dispositif de filage (1) à fibres libérées, comprenant deux paires de disques d'appui dont les disques d'appui (40, 41, 42, 43 ; 47, 48) sont respectivement agencés de manière à réserver un espace interstitiel, et un rotor de filage (3) pourvu d'un arbre rotorique (4) monté dans ledit espace interstitiel, lesdits disques d'appui (40, 41, 42, 43 ; 47, 48) étant respectivement dotés d'un corps de base (44), **caractérisé par le fait que** les corps de base (44) renferment un palier respectif (45 ; 49, 49A, 49B) à roulement, ledit système de montage du rotor comporte des tourillons fixes (50, 51, 52, 53), et les paliers (45 ; 49, 49A, 49B) à roulement sont implantés sur un tourillon (50, 51, 52, 53) respectif.

2. Système de montage de rotor, selon la revendication 1, **caractérisé par le fait que** les paliers (45 ; 49, 49A, 49B) à roulement sont reliés aux tourillons (50, 51, 52, 53) par ajustement serré.

3. Système de montage de rotor, selon l'une des revendications 1 ou 2, **caractérisé par le fait que** le corps de base (44) des disques d'appui (40, 41, 42, 43) est constitué d'une matière plastique.

4. Système de montage de rotor, selon la revendication 3, **caractérisé par le fait que** le corps de base (44) est venu de moulage par injection.

5. Système de montage de rotor, selon la revendication 4, **caractérisé par le fait que** le palier (45) à roulement est noyé dans le corps de base (44), et est intégré suite au retrait se produisant lors du moulage par injection.

6. Système de montage de rotor, selon la revendication 5, **caractérisé par le fait que** le corps de base (44) ceinture le pourtour extérieur du palier (45) à roulement dans le sens radial.

7. Système de montage de rotor, selon l'une des revendications 5 ou 6, **caractérisé par le fait que** le corps de base (44) ceinture au moins partiellement le palier (45) à roulement dans le sens axial.

8. Système de montage de rotor, selon l'une des revendications 3 à 7, **caractérisé par** la présence d'une garniture de roulement (46) sur le pourtour extérieur du corps de base (44), ledit corps de base (44) et ladite garniture de roulement (46) consistant, respectivement, en des première et seconde matières plastiques.

9. Système de montage de rotor, selon l'une des revendications 1 ou 2, **caractérisé par le fait que** les disques d'appui (47, 48) incluent un corps de base (54) en métal.

10. Système de montage de rotor, selon la revendication 9, **caractérisé par le fait que** les disques d'appui (47, 48) incluent un corps de base (54) en aluminium.

11. Système de montage de rotor, selon l'une des revendications 9 ou 10, **caractérisé par le fait que** le palier (49, 49A, 49B) à roulement est relié au corps de base (54) par ajustement serré.

12. Système de montage de rotor, selon l'une des revendications 9 ou 10, **caractérisé par le fait que** le palier (49, 49A, 49B) à roulement est relié au corps de base (54) par sertissage.

13. Système de montage de rotor, selon l'une des revendications 1, 2, 3, 4, 9 ou 10, **caractérisé par le fait que** le palier (45 ; 49, 49A, 49B) à roulement est relié au corps de base (44 ; 54) par collage.

14. Système de montage de rotor, selon l'une des revendications 1, 2, 9, 10, 11, 12 ou 13, **caractérisé par** la présence d'une garniture de roulement (46 ; 55) sur le pourtour extérieur du corps de base (44 ; 54).

15. Système de montage de rotor, selon l'une des revendications 1 à 14, **caractérisé par le fait que** le palier à roulement est réalisé en tant que roulement à billes (45 ; 49, 49A, 49B).

16. Procédé de fabrication d'un disque d'appui (40, 41, 42, 43), ledit disque d'appui (40, 41, 42, 43) incluant un corps de base (44) en matière plastique, et ledit corps de base (44) renfermant un palier à roulement, **caractérisé par le fait que** le corps de base (44) est venu de moulage par injection ; **par le fait que** le palier (45) à roulement est placé, préalablement au moulage par injection, dans un outil servant à la fabrication dudit corps de base (44) ; et **par le fait que** ledit palier (45) à roulement est relié audit corps de base (44), au cours du moulage par injection, de façon telle qu'il dispose d'une assise ferme dans ledit corps de base.
